# EUROPÄISCHE PATENTANMELDUNG

(11) **EP 4 596 327 A1**
(43) Veröffentlichungstag der Anmeldung: **06.08.2025**
(21) Anmeldenummer: 24155767.7
(22) Anmeldetag: 05.02.2024
(51) Int. Cl.: B60R 11/02

(54) **VORRICHTUNG FÜR EIN FAHRZEUGDACH UND FAHRZEUGDACH FÜR EIN KRAFTFAHRZEUG**

(71) Anmelder: Webasto SE, 82131 Stockdorf (DE)
(72) Erfinder: Popovici, Andrei, 82131 Stockdorf (DE); Baumann, Matthias, 82131 Stockdorf (DE)
(74) Vertreter: Epping - Hermann - Fischer

(57) **Zusammenfassung**

Eine Vorrichtung (10) für ein Fahrzeugdach (2) umfasst einen Querträger (17), der dazu vorgesehen ist, mit dem Fahrzeugdach (1) gekoppelt zu werden. Die Vorrichtung (10) umfasst weiter eine Projektionsanordnung mit einer rollbaren Leinwand (11) und einem Projektor (15), die in Abstimmung aufeinander positioniert und mit dem Querträger (17) gekoppelt sind, wobei die Leinwand (11) mittels einer Leinwandwelle (12) auf- und abwickelbar ist. Die Vorrichtung (10) umfasst außerdem ein Abschirmungselement (13), das bezogen auf die Längsachse (L) auf einer zu der Leinwand (11) gegenüberliegenden Seite des Projektors (15) angeordnet ist, sodass der Projektor (15) entlang der Längsachse (L) zwischen der Leinwand (11) und dem Abschirmungselement (13) angeordnet ist und in einem Betrieb eine Rückseitenprojektion auf die Leinwand (11) einrichtet.

## Beschreibung

Die Erfindung betrifft eine Vorrichtung für ein Fahrzeugdach und ein Fahrzeugdach für ein Kraftfahrzeug mit einer solchen Vorrichtung.

Einige Kraftfahrzeuge weisen eine Bildschirmanordnung auf, die auf Wunsch ein Unterhaltungsprogramm bereitstellen kann und zu einem erhöhten Komfort des Kraftfahrzeugs beiträgt. Gegebenenfalls ist eine solche Bildschirmanordnung mit einem Kinematikkonzept versehen, welches bei Bedarf ein Ein- und Ausklappen der Bildschirmanordnung ermöglicht. Dabei ist es eine Herausforderung eine platzsparende und kostengünstige Vorrichtung mit einer solchen Unterhaltungselektronik zu ermöglichen und zu einem Komfort des Kraftfahrzeugs beizutragen.

Es ist eine Aufgabe, die der Erfindung zugrunde liegt, eine Vorrichtung für ein Fahrzeugdach zu schaffen, die eine Unterhaltungsfunktion bereitstellt und zu einem Komfort des Kraftfahrzeugs beitragen kann und zudem platzsparend und kostengünstig realisierbar ist.

Die Aufgabe wird durch die Merkmale des unabhängigen Patentanspruchs gelöst. Vorteilhafte Weiterbildungen sind in den abhängigen Patentansprüchen angegeben.

Eine erfindungsgemäße Vorrichtung für ein Fahrzeugdach umfasst einen Querträger, der dazu ausgebildet ist, mit dem Fahrzeugdach gekoppelt zu werden, sodass sich der Querträger überwiegend quer zu einer Längsachse des Fahrzeugdachs erstreckt. Der Querträger stellt insbesondere ein Halteelement für weitere Komponenten der Vorrichtung dar und kann als separates Teil realisiert sein oder einen Abschnitt einer Komponente des Fahrzeugdachs bezeichnen. Die Vorrichtung umfasst ferner eine Projektionsanordnung mit einer rollbaren Leinwand und einem Projektor, insbesondere einem Video-Projektor. Die Leinwand und der Projektor sind in Abstimmung aufeinander positioniert und mit dem Querträger gekoppelt. Die Leinwand ist mittels einer Leinwandwelle auf- und abwickelbar, um bedarfsweise ein Unterhaltungsprogramm zu ermöglichen. Die Vorrichtung umfasst außerdem ein Abschirmungselement, das bezogen auf die Längsachse auf einer zu der Leinwand gegenüberliegenden Seite des Projektors angeordnet ist, sodass der Projektor entlang der Längsachse zwischen der Leinwand und dem Abschirmungselement angeordnet ist und in einem Betrieb eine Rückseitenprojektion auf die Leinwand einrichtet.

Mittels der beschriebenen Vorrichtung ist eine Bildschirmanordnung für ein Fahrzeugdach mit einer rollbaren Leinwand und einem Projektor realisierbar, die besonders platzsparend verstaubar sind und zu einem erhöhten Komfort des Kraftfahrzeugs beitragen kann. Im Vergleich zu einem starren Display kann ein Platzbedarf gering gehalten werden und insbesondere in einer Parkposition des Displays kann zu einer größeren Kopffreiheit für Fahrzeugpassagiere beigetragen werden. Ferner ermöglicht die Vorrichtung eine vergrößerte Durchsicht durch das Fahrzeugdach, sofern dieses transparent ausgestaltet ist oder ein transparentes Dachelement aufweist.

Der Projektor kann besonders klein und platzsparend in der Vorrichtung integriert werden und weist zum Beispiel Abmessungen auf, die einer handelsüblichen Streichholz- oder Zigarettenschachtel gleichen. Der Projektor ist zwischen dem Abschirmelement und der Leinwand angeordnet und in einem Betrieb durch diese Elemente abgeschirmt, sodass unerwünschte Lichteffekte nicht oder deutlich reduziert nach vorne oder hinten in Richtung der Längsachse gelangen können. Somit kann zu einer sicheren Unterhaltungsmöglichkeit beigetragen werden, die einen Fahrbetrieb nicht oder kaum beeinträchtigt. Blendmöglichkeiten werden somit gering gehalten.

Im Zusammenhang mit dieser Beschreibung bezeichnen Begriffe, wie "oben", "unten", "vorne", "hinten", "Oberseite", "Unterseite" sowie "horizontal" und "vertikal", Richtungen oder Orientierungen gemäß einem betriebsbereiten Kraftfahrzeug mit einem Fahrzeugdach und einer daran angeordneten Vorrichtung. Demgemäß ist ein unterer Rand der Leinwand in einem ausgerollten Zustand einem Fahrzeuginnenraum zugewandt. Eine übliche Fahrtrichtung ist nach vorne gerichtet, während das Fahrzeugheck hinten angeordnet ist.

Gemäß einer bevorzugten Weiterbildung ist auch das Abschirmungselement rollbar ausgebildet und mittels einer Abschirmungswelle auf- und abwickelbar. Das Abschirmungselement ist mittels der Abschirmungswelle mit dem Querträger gekoppelt und bedeckt bei einem Auf- und Abwickeln eine Rückseite des Projektors vorgegeben. Beispielweise sind das Abschirmungselement und die Leinwand in Form eines jeweiligen Rollos aus einem Canvas-Textilmodul gefertigt. Die Leinwand und das Abschirmungselement können auch einstückig aus einer gemeinsamen Materialbahn ausgebildet sein und den dazwischen befindlichen Projektor umgeben. Zum Beispiel weist die Vorrichtung ein oder mehrere Umlenkbereiche auf, die ein widerstands- und reibungsarmes Bewegen der Materialbahn ermöglicht. Alternativ oder zusätzlich zu einem oder mehreren Umlenkbereichen kann eine Fixierung der Materialbahn an einer Fixierungseinheit vorgesehen sein.

Alternativ können das Abschirmungselement und die Leinwand aus unterschiedlichen Materialen gefertigt sein, sodass jeweils nutzbringende unterschiedliche Eigenschaften eingerichtet werden können. Beispielsweise kann das Abschirmungselement besonders dicht gewebt sein, um ein Durchtreten von Licht zu verhindern oder signifikant zu verringern. Die Leinwand kann relativ lichtdurchlässig ausgeführt sein, um eine vorteilhafte Videoprojektion zu ermöglichen. Beispielsweise kann die Leinwand auch eine gewebte Struktur aufweisen, die eine verbesserte Kontrastdarstellung ermöglicht und/oder unerwünschten Lichtreflexionen entgegenwirkt.

Alternativ zu einem wickelbaren Abschirmelement kann das Abschirmelement auch starr und plattenförmig ausgebildet sein und eine Rückseite des Projektors kaschieren und Lichtreflexe blockieren. Ein solches starres Abschirmelement kann als plattenförmige Blende dauerhaft vorgesehen sein. Bevorzugt ist das Abschirmelement ein- und ausfahrbar oder ein- und ausklappbar. Es kein ein zusammenhängendes Element realisieren oder mehrere Teilelement aufweisen. Das Abschirmungselement kann jeweils ästhetisch ansprechend eine Rückseite des Projektors und der Leinwand kaschieren oder abschatten, um Lichtreflexe zu blockieren und/oder elektronische Anschlüsse und/oder Versorgungskabel für eine Strom- und Datenversorgung zu bedecken.

Im Hinblick auf ein wickelbares Abschirmelement sind gemäß einer weiteren bevorzugten Weiterbildung die Abschirmungswelle und die Leinwandwelle aufeinander abgestimmt ausgebildet, sodass das Abschirmungselement und die Leinwand synchron auf- und abwickelbar sind. Dies kann zum Beispiel mittels einer Fixierungseinheit eingerichtet sein, mit der das Abschirmungselement und die Leinwand gekoppelt sind. Die Fixierungseinheit ist zum Beispiel mit einer jeweiligen Unterkante oder einem jeweiligen unteren Rand des Abschirmungselements und der Leinwand verbunden, sodass bei einem Entfernen der Fixierungseinheit weg von dem Querträger das Abschirmungselement von der Abschirmungswelle und die Leinwand von der Leinwandwelle abgewickelt wird. Bei einem Aufwickeln des Abschirmungselements und der Leinwand auf die jeweilige Welle wird die Fixierungseinheit zu dem Querträger hinbewegt.

Ferner können die Leinwand und die Leinwandwelle und/oder das Abschirmungselement und die Abschirmungswelle derart aufeinander abgestimmt ausgebildet sein, dass sie bezogen auf einen aufgewickelten Zustand und eine radiale Richtung quer zu einer Längserstreckung der jeweiligen Welle einen Durchmesser von einschließlich 10-50 mm aufweisen. Zum Beispiel weist die Leinwandwelle mit der darauf aufgewickelten Leinwand einen Durchmesser im Bereich von 15-30 mm auf und kann besonders platzsparend unter dem Fahrzeugdach angeordnet bzw. verstaut werden.

Die radiale Ausdehnung ist insbesondere abhängig von einer Größe der Leinwand, der Leinwanddicke und dem Durchmesser der Leinwandwelle. Entsprechend weist eine Leinwand mit einer größeren ausrollbaren Bildschirmdiagonale üblicherweise eine größere radial aufgewickelte Ausdehnung auf als eine Leinwand mit kleinerer Bildschirmdiagonale. Die Leinwand ist in einem aufgewickelten Zustand um die Leinwandwelle herum angeordnet. Der aufgewickelte Zustand kann auch als Ruhezustand oder Parkposition der Leinwand bezeichnet werden. Zudem kann der aufgewickelte Zustand auch als ein Zustand bezeichnet werden, in dem die Leinwand eingestellt, eingefahren, eingespannt, eingerollt oder eingeholt ist. Entsprechendes gilt für ein auf- und abwickelbares Abschirmelement. Der abgewickelte Zustand des jeweiligen Elements kann auch als ein Zustand bezeichnet werden, in dem es ausgestellt, ausgefahren, aufgespannt oder ausgerollt ist.

Gemäß einer weiteren Weiterbildung weist die Vorrichtung eine Führungsmechanik mit Führungshebeln auf, die mit dem Querträger und der Fixierungseinheit gekoppelt und dazu eingerichtet sind, bei einem Abwickeln der Leinwand von der Leinwandwelle die Fixierungseinheit von dem Querträger wegzutreiben und die Leinwand aufzuspannen und bei einem Aufwickeln der Leinwand auf die Leinwandwelle die Fixierungseinheit zu dem Querträger hin einzuziehen und die Leinwand auf die Leinwandwelle einzuholen. Entsprechendes kann für das Abschirmungselement eingerichtet sein, sofern dieses auf eine Abschirmungswelle auf- und abwickelbar ausgebildet ist.

Eine solche führende Hebelmechanik kann ebenfalls durch das Abschirmungselement kaschiert und versteckt werden, sodass sie bezogen auf einen abgewickelten Zustand der Leinwand zwischen der Leinwand und dem Abschirmungselement angeordnet ist. Die Führungsmechanik kann für einen manuellen Betrieb eingerichtet sein. Vorzugsweise ist die Führungsmechanik aber alternativ oder zusätzlich motorisiert ausgebildet und kann elektrisch angetrieben werden.

Gemäß einer weiteren Weiterbildung weist die Vorrichtung mindestens ein Aufspannelement auf, welches mit der Leinwand gekoppelt und dazu eingerichtet ist, die Leinwand bei einem Abwickeln von der Leinwandwelle und bei einem Aufwickeln auf die Leinwandwelle vorgegeben zu spannen. Das oder die Aufspannelemente sind dazu vorgesehen, eine nutzbringende Spannkraft für die Leinwand bereitzustellen, um Faltenbildung beim Aufspannen und Einholen zu vermeiden oder einer solchen zumindest entgegenzuwirken.

Die Leinwandwelle, und sofern vorgesehen auch die Abschirmungswelle, kann als Hohlwelle ausgebildet sein und eine jeweilige Wellenachse umgeben. Das oder die Aufspannelemente können zwischen der jeweiligen Welle und der Wellenachse angeordnet sein. Die Aufspannelemente sind einerseits mit der jeweiligen Welle und andererseits mit der zugehörigen Wellenachse gekoppelt. Somit können die Aufspannelemente besonders platzsparend innerhalb der Leinwandwelle oder der Abschirmungswelle angeordnet werden und tragen in Bezug auf eine Dicke oder einen Durchmesser der jeweiligen Welle nicht auf. Das oder die Aufspannelemente können als Federelemente, insbesondere als Triebfedern, ausgebildet sein. Somit kann an vorgegebenen Positionen eine Spannkraft bereitgestellt werden, die ein zuverlässiges Aufspannen der Leinwand bzw. des Abschirmungselements ermöglicht. Die Triebfedern fungieren als entgegengewickelte Rollo- oder Blattfedern, die entgegen ihrer vorgegebenen Biegerichtung aufgewickelt sind.

Gemäß einer weiteren Weiterbildung weist die Vorrichtung ein oder mehrere Verblendungselemente, welche mit der Leinwand gekoppelt und dazu eingerichtet sind, bei einem Abwickeln der Leinwand von der Leinwandwelle seitliche Verblendungen zwischen dem Abschirmungselement und der Leinwand auszubilden. Solche Verblendungselemente können zum Beispiel einen Rahmen einrichten, der ausgeklappt und eingeklappt werden kann und ein unerwünschtes seitliches Eintreten von Licht in den Bereich des Projektors und seitliches Austreten von Licht in den Fahrzeuginnenraum unterbindet oder reduziert. Somit können störende Lichtreflexionen verringert werden, die den Fahrbetrieb oder den Kontrast der Projektion beeinträchtigen können. Somit können Blendmöglichkeiten besonders gering gehalten und dadurch zu einer sicheren Unterhaltungsmöglichkeit beigetragen werden.

Gemäß einer weiteren Weiterbildung weist die Vorrichtung ein erstes Führungssystem mit Führungselementen auf, die mit dem Querträger und/oder mit dem Fahrzeugdach koppelbar sind, sodass der Querträger mittels der Führungselemente des ersten Führungssystems entlang der Längsachse relativ zu dem Fahrzeugdach vorgegeben verfahrbar ist. Der Querträger und das Führungssystem können insbesondere so ausgebildet sein, dass der Querträger und die daran angeordnete Leinwand von ganz hinten bis nach ganz vorne unter dem Fahrzeugdach verfahren werden können. Somit kann die Leinwand für die Rückbank eines Kraftfahrzeugs bereitgestellt oder auch mittels des Querträgers weiter nach vorne verfahren werden, sodass auch vordere Fahrzeugpassagiere die Leinwand und das von diesem ausgegebene Unterhaltungsprogramm beobachten können. Eine solche vorderste Einstellung ist zum Beispiel für einen Parkzustand des Kraftfahrzeugs vorgesehen und/oder auch für autonom fahrende Kraftfahrzeuge geeignet, in welchen Fahrzeugpassagiere nicht selber das Kraftfahrzeug führen müssen und sich dem Unterhaltungsprogramm durch die Projektionsanordnung widmen können.

In einem verstauenden Zustand kann der Querträger mit der Projektionsanordnung somit zum Beispiel aus dem Sichtfeld der Fahrzeuginsassen nach hinten verfahren werden. Dies kann insbesondere im Zusammenhang mit einem Deckelsystem mit transparentem Panoramadach besonders komfortabel empfunden werden. Bei Nichtbedarf kann die Leinwand aufgewickelt in oder an dem Querträger verstaut und mit diesem bis in einen Heckbereich des Kraftfahrzeugs verfahren werden, sodass eine besonders große Durchsicht durch das Fahrzeugdach ohne unterbrechenden Querbalken freigegeben ist.

Gemäß einer weiteren Weiterbildung kann ein zweites Führungssystem mit Führungselementen vorgesehen sein, die mit dem Querträger und/oder mit der Leinwand und/oder dem Projektor gekoppelt sind, sodass die Leinwand und/oder der Projektor mittels der Führungselemente des zweiten Führungssystems entlang des Querträgers quer zu der Längsachse des Fahrzeugdachs vorgegeben verfahrbar ist. Somit kann die Leinwand mit dem Projektor unterhalb des Fahrzeugdachs nach links oder rechts in dem Kraftfahrzeug verfahren werden. Dies ist abhängig von der Größe der Leinwand, die insbesondere auf den vorgesehenen Einsatz unter dem Fahrzeugdachs abgestimmt wird.

Ferner kann der Projektor um eine vertikale Achse rotierbar ausgebildet sein. Die vertikale Achse ist bezogen auf einem an dem Fahrzeugdach verbauten Zustand der Vorrichtung im Wesentlichen senkrecht zu einer Haupterstreckungsebene des Fahrzeugdachs orientiert. Somit kann eine Projektion auf das Abschirmungselement erfolgen, wenn dieses dazu eingerichtet ist. Alternativ oder zusätzlich kann auch ein weiterer Projektor vorgesehen sein, der bezogen auf die Längsachse zwischen der Leinwand und dem Abschirmungselement angeordnet ist und in einem Betrieb eine Rückseitenprojektion auf das Abschirmungselement einrichtet. Somit kann eine Projektion auf die Leinwand und eine weitere Projektion auf das Abschirmungselement eingerichtet werden, um zum Beispiel jeweils ein Unterhaltungsprogramm für die vorderen und die hinteren Fahrzeugpassagiere bereitzustellen.

Ein erfindungsgemäßes Fahrzeugdach für ein Kraftfahrzeug umfasst ein Dachelement, das dazu eingerichtet ist, mit einer Dachkarosserie des Kraftfahrzeugs gekoppelt zu werden. Das Fahrzeugdach umfasst ferner eine der zuvor beschriebenen Ausführungsformen der Vorrichtung mit der Projektionsanordnung, die auf einer einem Fahrzeuginnenraum zugewandten Seite des Dachelements mit diesem gekoppelt ist. Dabei kann die Vorrichtung mittels des Querträgers direkt oder mittelbar mit dem Dachelement verbunden sein. Der Querträger kann als ortsfeste Traverse mit dem Fahrzeugdach gekoppelt sein oder ist verfahrbar relativ zu dem Fahrzeugdach eingerichtet. Dadurch, dass das Fahrzeugdach eine Ausführungsform der Vorrichtung umfasst, sind beschriebene Merkmale und Eigenschaften der Vorrichtung auch für das Fahrzeugdach offenbart und umgekehrt.

Das Dachelement ist zum Beispiel als Deckelsystem mit Glasdeckel oder als Panoramaglasdach realisiert. Alternativ kann das Dachelement aber auch eine nicht transparente Dachhaut des Fahrzeugdachs ausbilden. Das Dachelement kann hoch- oder ausstellbar eingerichtet sein und/oder ortsfest mit einer Dachkarosserie und/oder verfahrbar relativ zu dieser ausgebildet sein.

Mittels der beschriebenen Vorrichtung kann ein Unterhaltungsprogramm in einem Kraftfahrzeug bereitgestellt werden, welches kostengünstig realisierbar und platzsparend anordenbar ist. Im Vergleich zu konventionellen Systemen mit starren Bildschirmen können erforderliche Kosten deutlich reduziert werden. Zudem bedürfen die aufwickelbare Leinwand und der Projektor nur einen geringen Bauraum. Insbesondere entlang der Fahrzeuglängsachse kann die Vorrichtung übersichtlich eingerichtet werden und zu einer vergrößerten Durchsicht durch ein transparentes Fahrzeugdach beitragen. Ferner bietet die Vorrichtung eine verbesserte Robustheit und eine geringere Funktionsanfälligkeit im Vergleich zu alternativen Systemen. Darüber hinaus trägt die beschriebene Vorrichtung auch zu einer erhöhten Sicherheit im Straßenverkehr bei, da die Vorrichtung im Vergleich zu konventionellen Bildschirmsystemen am Fahrzeugdach mit einer geringeren Anzahl von Komponenten und/oder kleineren Abmessungen von Komponenten deutlich weniger Masse aufweist, sodass im Falle eines Unfalls weniger Masse beschleunigt und eine Verletzungsgefahr reduziert wird.

Ausführungsbeispiele der Erfindung sind im Folgenden anhand der schematischen Zeichnungen näher erläutert. Es zeigen:
- Figur 1: ein Fahrzeugdach in einer perspektivischen Ansicht,
- Figur 2: ein Ausführungsbeispiel einer Vorrichtung für das Fahrzeugdach in einer seitlichen Schnittdarstellung,
- Figur 3: ein weiteres Ausführungsbeispiel der Vorrichtung für das Fahrzeugdach in einer seitlichen Schnittdarstellung, und
- Figuren 4-6: ein Ausführungsbeispiel einer Hebelmechanik der Vorrichtung in verschiedenen Zuständen.

Elemente gleicher Konstruktion oder Funktion sind figurenübergreifend mit den gleichen Bezugszeichen gekennzeichnet. Aus Gründen der Übersichtlichkeit sind gegebenenfalls nicht alle dargestellten Elemente in sämtlichen Figuren mit Bezugszeichen gekennzeichnet.

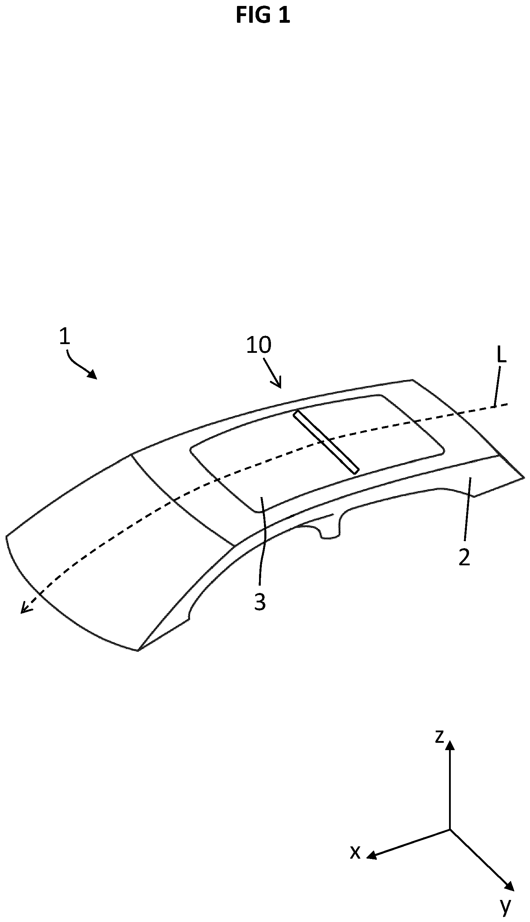

Figur 1 zeigt schematisch in einer perspektivischen Ansicht ein Fahrzeugdach 1 eines Kraftfahrzeugs, das ein Dachelement, ein Deckelsystem oder einen Deckel 3 umfasst, welcher eine Dachöffnung in dem Fahrzeugdach 1 verschließt. Der Deckel 3 ist zum Beispiel ein zu dem Fahrzeugdach 1 unbewegliches Festglaselement. Alternativ ist der Deckel 3 relativ zu dem Fahrzeugdach 1 beweglich, um wahlweise die Dachöffnung in dem Fahrzeugdach 1 freizugeben und zu verschließen. Das Fahrzeugdach 1 kann auch keinen Deckel 3 aufweisen und eine ausnehmungsfreie Dachhaut, zum Beispiel eines falt- oder zusammenklappbaren Cabriodachs, realisieren, welches in einem Heckbereich des Kraftfahrzeugs verstaut werden kann. Darüber hinaus kann das Fahrzeugdach 1 auch mit Deckel 3 ein Cabriodach ausbilden, bei dem der Deckel 3 so ausgestaltet ist, dass ein Zusammenfalten oder Zusammenklappen ermöglicht ist.

Unterhalb des Fahrzeugdachs 1 ist eine Vorrichtung 10 mit einem Querträger 17 angeordnet, der bezogen auf eine Längsachse L verfahrbar ausgebildet sein kann. Der Querträger 17 realisiert einen tragfähigen Balken oder eine Traverse, die mittelbar oder unmittelbar mit dem Fahrzeugdach 1 und/oder dem Deckel 3 gekoppelt ist.

Im Zusammenhang mit dieser Beschreibung bezeichnen Begriffe, wie "oben", "unten", "vorne", "hinten", "Oberseite", "Unterseite" sowie "horizontal" und "vertikal", Richtungen oder Orientierungen gemäß einem betriebsbereiten Kraftfahrzeug 1 mit einem Fahrzeugdach 1, wie es in der Figur 1 illustriert ist. Demgemäß ist eine horizontale Ebene durch die eingezeichnete x-y-Ebene aufgespannt und senkrecht zu der eingezeichneten z-Richtung orientiert, welche eine Vertikale darstellt. Die Längsachse L entspricht einer Fahrzeuglängsachse und die eingezeichnete Pfeilrichtung repräsentiert eine übliche Fahrtrichtung nach vorne. Ein Fahrzeugheck ist hinten angeordnet bzw. ausgebildet. Der Querträger 17 ist somit unter dem Fahrzeugdach 1 angeordnet und/oder in diesem integriert und einem Fahrzeuginnenraum des Kraftfahrzeugs zugewandt.

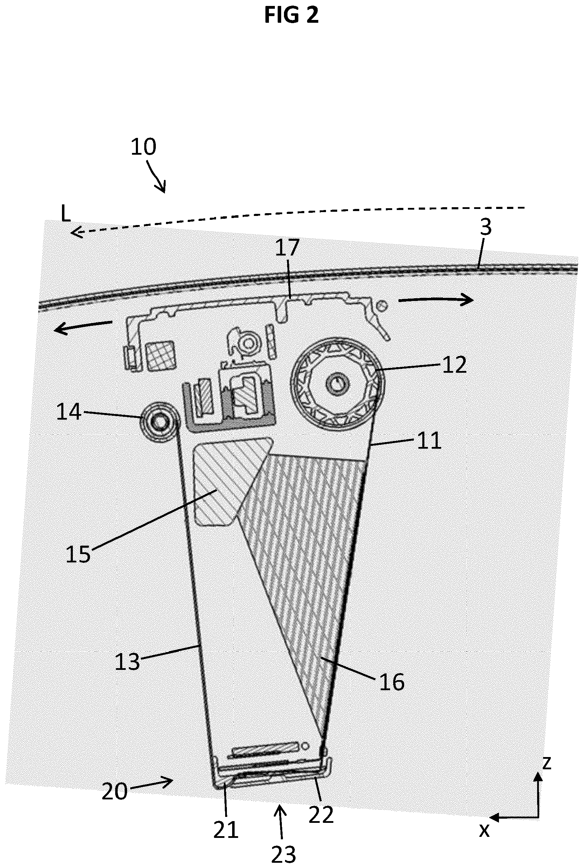

Figur 2 zeigt ein Ausführungsbeispiel der Vorrichtung 10 für das Fahrzeugdach 1 in einer seitlichen Schnittdarstellung. Die Vorrichtung 10 umfasst eine Projektionsanordnung mit einer rollbaren Leinwand 11, die mittels einer Leinwandwelle 12 auf- und abwickelbar ist und das mit dem Querträger 17 gekoppelt ist. Die Leinwandwelle 12 ist zum Beispiel mittels einer Wellenanbindung mit dem Querträger 17 gekoppelt. Der Querträger 17 ist mit dem Fahrzeugdach 1 gekoppelt, sodass er sich überwiegend quer zu der Längsachse L erstreckt. Eine Haupterstreckungsrichtung oder Längserstreckungsrichtung des Querträgers 17 führt somit im Wesentlichen von einer linken Seite des Fahrzeugdachs 1 zur gegenüberliegenden rechten Seite des Fahrzeugdachs 1.

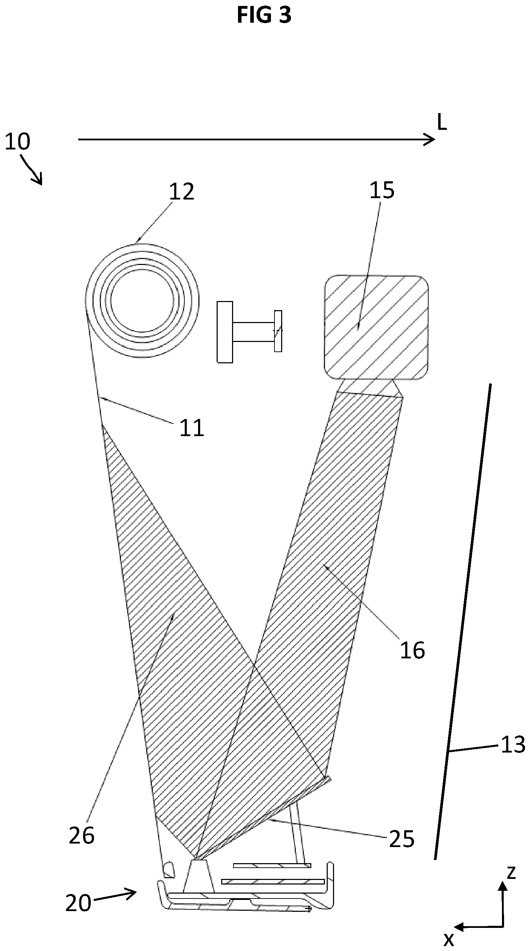

Die Projektionsanordnung umfasst ferner einen Projektor 15, der in Abstimmung auf die Leinwand positioniert und mit dem Querträger 17 gekoppelt ist. In einem Betrieb projiziert der Projektor ein Bild oder ein Video auf die Rückseite der ausgefahrenen Leinwand 11. Dies ist in Figur 2 mit einem Projektionskegel oder Projektionsbereich 16 angedeutet. Der Projektor 15 kann so eingerichtet und angeordnet sein, dass er direkt auf die Rückseite der Leinwand 11 abstrahlt oder seine Emission mittels einer oder mehrerer Optiken, wie Umlenkspiegeln oder Prismen, umgeleitet wird (s. Figur 3).

Die Vorrichtung 10 umfasst außerdem ein Abschirmungselement 13, das bezogen auf die Längsachse L auf einer zu der Leinwand 11 gegenüberliegenden Seite des Projektors 15 angeordnet ist, sodass der Projektor 15 entlang der Längsachse L zwischen der Leinwand 11 und dem Abschirmungselement 13 angeordnet ist und in einem Betrieb eine Rückseitenprojektion auf die Leinwand 11 einrichtet.

Das Abschirmungselement 13 ist ebenfalls rollbar ausgebildet und mittels einer Abschirmungswelle 14 auf- und abwickelbar, sodass das Abschirmungselement 13 eine Rückseite des Projektors 15 vorgegeben bedeckt. Die Abschirmungswelle 14 und die Leinwandwelle 12 sind insbesondere aufeinander abgestimmt ausgebildet, sodass das Abschirmungselement 13 und die Leinwand 11 synchron auf- und abwickelbar sind. Das Abschirmungselement 13 und die Leinwand 11 können separate Textilmodule einrichten oder einstückig aus einer gemeinsamen Materialbahn ausgebildet sein. Der Querträger 17 kann ein Gehäuse aufweisen, in dem die Leinwandwelle 12 und die Abschirmungswelle 14 angeordnet sind. Die Figur 2 zeigt die rollbare Leinwand 11 in einem ausgefahrenen oder abgerollten oder abgewickelten Zustand.

Die Vorrichtung 10 umfasst außerdem eine Fixierungseinheit 20, die an einem unteren Ende des Abschirmungselements 13 und der Leinwand 11 mit diesen gekoppelt ist. Sind das Abschirmungselements 13 und die Leinwand 11 einstückig ausgebildet, so ist die Fixierungseinheit 20 in einem Übergangsbereich zwischen der Leinwand 11 und dem Abschnitt angeordnet, der das Abschirmungselement 13 einrichtet. Die Fixierungseinheit 20 umfasst einen Fixierungsbalken 21, mit dem das Abschirmungselement 13 und die Leinwand 11 verbunden sind. Ferner ist an einer Unterseite 23 des Fixierungsbalkens 21 ein Verblendungselement 22 vorgesehen, das eine vorgegebene Kaschierung einrichtet und einen ästhetisch ansprechenden unteren Abschluss der Vorrichtung 10 ausbildet.

Der Fixierungsbalken 21 der Fixierungseinheit 20 ist zum Beispiel mittels einer Hebelmechanik von dem Querträger 17 wegbewegbar, sodass die Leinwand 11 und das Abschirmungselement 13 von der jeweiligen Welle 12, 14 abgewickelt werden. Bei einem Aufwickeln oder Einholen der Leinwand 11 und des Abschirmungselements 13 wird die Fixierungsbalken 21 mittels der Hebelmechanik zum Querträger 7 hinbewegt und so weit eingezogen, wie es der Projektor 15 und/oder weiteren Komponenten der Vorrichtung 10 es erlauben, um einen möglichst flachen und platzsparenden verstauten Zustand einzurichten. Mittels der Fixierungseinheit 20 sind das Abschirmungselement 13 und die Leinwand 11 synchron auf- und abwickelbar.

Der Fixierungsbalken 21 weist in jeweiligen Umlenkungsbereichen, in denen das Abschirmungselement 13 und die Leinwand 11 umgelenkt werden, bevorzugt eine abgerundete Kontur auf, um eine zuverlässige und schonende Spannung der jeweiligen Elemente zu ermöglichen. Der Fixierungsbalken 21 ist zum Beispiel aus Aluminium oder einem glasfaserverstärkten Kunststoff gefertigt und weist eine ausreichende Steifigkeit auf, um ein zuverlässiges Anbinden und Aufspannen der Leinwand 11 und des Abschirmungselements 13 zu ermöglichen.

Figur 3 zeigt ein Ausführungsbeispiel der Vorrichtung 10, in dem der Projektor 15 nach unten gerichtet ist und abstrahlt, wobei der emittierte Projektionsbereich 16 mittels eines Spiegels 25 umgelenkt wird, sodass ein reflektierter Projektionsbereich 26 auf die Rückseite der Leinwand 11 trifft. Der Projektor 15 kann jeweils so gelagert sein, dass er in einem Ruhezustand in seiner Position veränderbar, zum Beispiel in vertikaler Richtung bewegbar oder einklappbar ist, sodass die Ruheposition insgesamt in vertikaler Richtung ein z Package reduziert werden kann.

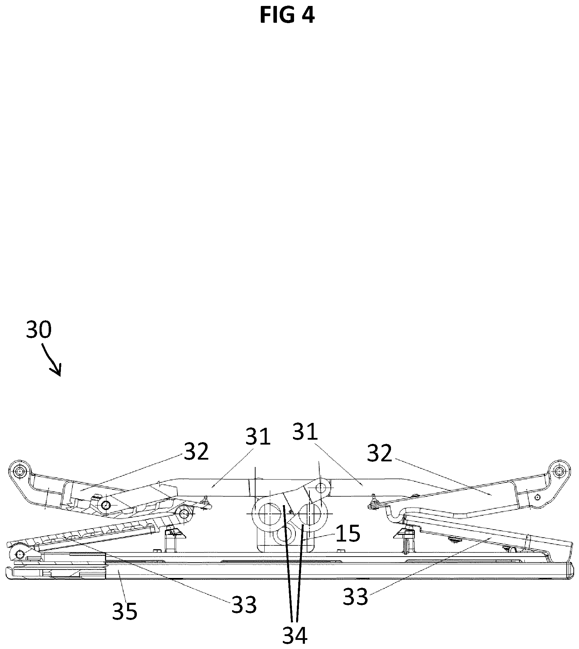

Die Figuren 4 bis 6 zeigen eine mögliche Ausgestaltung für eine Führungsmechanik oder Hebelmechanik 30 mit mehreren Führungshebeln 31-34, die mit dem Querträger 17 und mit einem Bodenträger 35 gekoppelt und zum Ausfahren und Einziehen der Leinwand 11 und des Abschirmungselements 13 eingerichtet sind. Der Bodenträger 35 kann eine Komponente der Fixierungseinheit 20 einrichten und zum Beispiel das Verblendungselement 22 realisieren oder umgekehrt. Der Bodenträger 35 dient dem Anbinden der Führungshebel 31-34 und bildet insbesondere einen ästhetisch ansprechenden unteren Abschluss der Hebelmechanik 30. Der Bodenträger 35 kann demgemäß das Verblendungselement 22 ausbilden. Alternativ sind das Verblendungselement 22 und der Bodenträger 35 als separate Komponenten eingerichtet.

Die Vorrichtung 10 kann zum Beispiel bezogen auf die x- und y-Richtung fest in oder an dem Fahrzeugdach 1, das zum Beispiel nicht öffenbar ist, verbaut sein. In einem Ruhezustand liegt der Bodenträger 35 und/oder das Verblendungselement 22 als untere Blende in einer Ebene zu einem Fahrzeuginnenhimmel. Erst bei einem Ausfahren oder Ausrollen wird die Leinwand 11 für Fahrzeuginsassen sichtbar.

Die Hebelmechanik 30 umfasst zwei Betätigungskurbeln 34, die mittels einer elektrischen Antriebseinheit betrieben werden können. Die Hebelmechanik 30 umfasst ferner zwei erste Hebelarme 31, zwei zweite Hebelarme 32 und zwei dritte Hebelarme 33. Die Betätigungskurbel 34 sind verschwenkbar mit den ersten Hebelarmen 31 gekoppelt, welche wiederum verschwenkbar mit den zweiten Hebelarmen 32 gekoppelt sind, welche wiederum verschwenkbar mit den dritten Hebelarmen 33 gekoppelt sind, welche wiederum verschwenkbar mit dem Bodenträger 35 gekoppelt sind.

Die Betätigungskurbeln 34 und Hebelarme 31-33 sind dazu eingerichtet, bei einem Abwickeln der Leinwand 11 von der Leinwandwelle 12 die Fixierungseinheit 20 bzw. den Bodenträger 35 von dem Querträger 17 wegzutreiben und die Leinwand 11 aufzuspannen. Bei einem Aufwickeln der Leinwand 11 auf die Leinwandwelle 12 wird die Fixierungseinheit 20 bzw. der Bodenträger 35 zu dem Querträger 17 hin eingezogen und die Leinwand 11 auf die Leinwandwelle 12 eingeholt. Entsprechendes gilt für das Abschirmungselement 13, das mit der Fixierungseinheit 20 bzw. dem Bodenträger 35 gekoppelt ist.

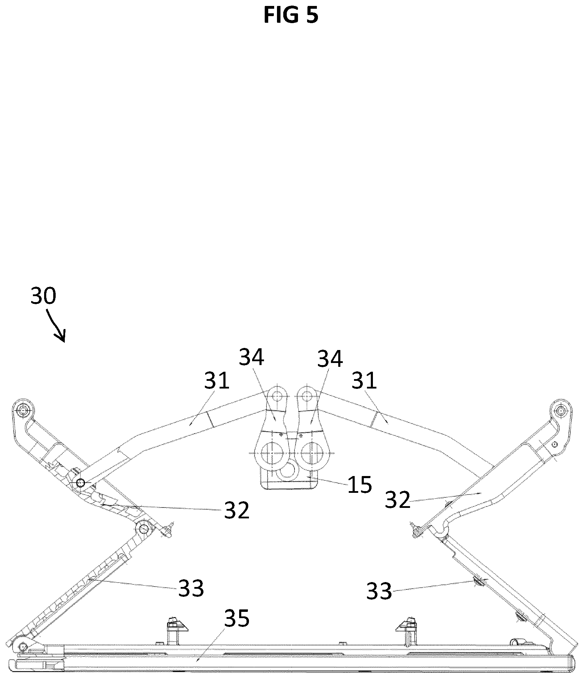

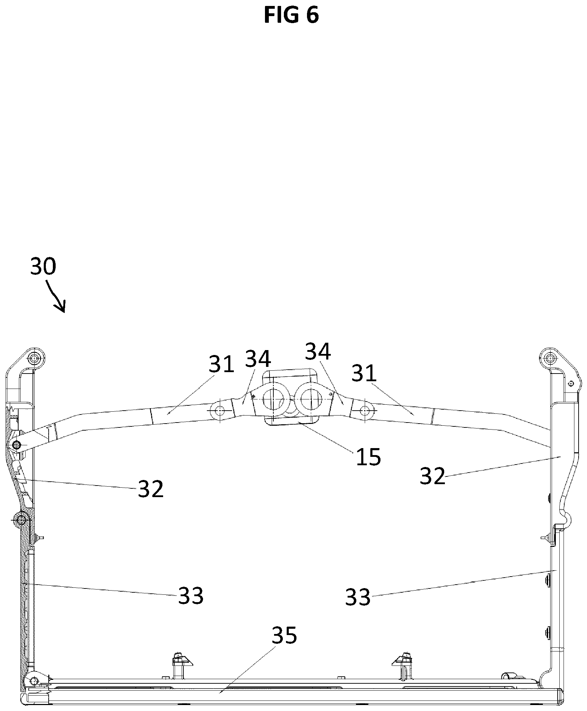

Figur 4 zeigt einen eingeklappten Zustand der Hebelmechanik 30, in dem die Leinwand 11 eingerollt ist. Figur 5 zeigt einen teilweise ausgeklappten Zustand der Hebelmechanik 30, in dem die Leinwand 11 teilweise aus- oder abgerollt ist. Figur 6 zeigt einen ausgeklappten Zustand der Hebelmechanik 30, in dem die Leinwand 11 aus- oder abgerollt ist. Die Figuren 4-6 zeigen Ansichten von vorne oder von hinten entlang der Langsachse bzw. Fahrrichtung L. Die von außen sichtbaren Hebelarme 32, 33 und der Bodenträger 35 können zudem als plattenförmige Verblendungselemente eingerichtet sein, um bei einem Abwickeln der Leinwand 11 von der Leinwandwelle 12 einen seitlichen und unteren Verblendungsrahmen zwischen dem Abschirmungselement 13 und der Leinwand 11 auszubilden. Auch die ersten Hebelarme 31 können als plattenförmige Verblendungselemente eingerichtet sein, um unerwünschte Lichtreflexionen nach oben zu blockieren.

### Bezugszeichenliste

- 1: Fahrzeugdach
- 2: Dachkarosserie / Dachhaut
- 3: Deckel
- 10: Vorrichtung
- 11: rollbare Leinwand
- 12: Leinwandwelle
- 13: Abschirmungselement
- 14: Abschirmungswelle
- 15: Projektor
- 16: Projektionsbereich
- 17: Querträger
- 20: Fixierungseinheit
- 21: Fixierungsbalken
- 22: Verblendungselement
- 23: Unterseite des Fixierungsbalkens
- 25: Spiegel
- 26: reflektierter Projektionsbereich
- 30: Hebelmechanik / Blendenmechanik
- 31: erster Hebelarm
- 32: zweiter Hebelarm / Verblendungselement
- 33: dritter Hebelarm / Verblendungselement
- 34: Betätigungskurbel
- 35: Bodenträger / Verblendungselement

- L: Längsachse / Fahrtrichtung

## Patentansprüche

1. Vorrichtung (10) für ein Fahrzeugdach (1), aufweisend:
- einen Querträger (17), der dazu ausgebildet ist, mit dem Fahrzeugdach (1) gekoppelt zu werden, sodass sich der Querträger (17) überwiegend quer zu einer Längsachse (L) des Fahrzeugdachs (1) erstreckt,
- eine Projektionsanordnung mit einer rollbaren Leinwand (11) und einem Projektor (15), die in Abstimmung aufeinander positioniert und mit dem Querträger (17) gekoppelt sind, wobei die Leinwand (11) mittels einer Leinwandwelle (12) auf- und abwickelbar ist, und
- ein Abschirmungselement (13), das bezogen auf die Längsachse (L) auf einer zu der Leinwand (11) gegenüberliegenden Seite des Projektors (15) angeordnet ist, sodass der Projektor (15) entlang der Längsachse (L) zwischen der Leinwand (11) und dem Abschirmungselement (13) angeordnet ist und in einem Betrieb eine Rückseitenprojektion auf die Leinwand (11) einrichtet.

2. Vorrichtung (10) nach Anspruch 1, bei dem das Abschirmungselement (13) rollbar ausgebildet und mittels einer Abschirmungswelle (14) auf- und abwickelbar ist, wobei das Abschirmungselement (13) mittels der Abschirmungswelle (14) mit dem Querträger (17) gekoppelt ist und bei einem Auf- und Abwickeln eine Rückseite des Projektors (15) vorgegeben bedeckt.

3. Vorrichtung (10) nach Anspruch 2, bei der die Abschirmungswelle (14) und die Leinwandwelle (12) aufeinander abgestimmt ausgebildet sind, sodass das Abschirmungselement (13) und die Leinwand (11) synchron auf- und abwickelbar sind.

4. Vorrichtung (10) nach Anspruch 2 oder 3, bei der die Leinwand (11) und das Abschirmungselement (13) einstückig aus einer gemeinsamen Materialbahn ausgebildet sind.

5. Vorrichtung (10) nach einem der vorhergehenden Ansprüche, bei der die Leinwand (11) und die Leinwandwelle (12) derart aufeinander abgestimmt ausgebildet sind, dass sie bezogen auf einen aufgewickelten Zustand und eine radiale Richtung quer zu einer Längserstreckung der Leinwandwelle (12) zusammen einen Durchmesser im Bereich von 15-30 mm aufweisen.

6. Vorrichtung (10) nach einem der vorhergehenden Ansprüche, bei der das Abschirmungselement (13) und die Leinwand (11) jeweils mit einer Fixierungseinheit (20) gekoppelt sind, die bei einem Abwickeln der Leinwand (11) von dem Querträger (13) wegbewegt und bei einem Aufwickeln der Leinwand (11) zu dem Querträger (13) hinbewegt wird.

7. Vorrichtung (10) nach einem der vorhergehenden Ansprüche, aufweisend:
eine Führungsmechanik (30) mit Führungshebeln (31-34), die mit dem Querträger (17) und mit der Fixierungseinheit (20) gekoppelt sind und die dazu eingerichtet sind, bei einem Abwickeln der Leinwand (11) von der Leinwandwelle (12) die Fixierungseinheit (20) von dem Querträger (17) wegzutreiben und die Leinwand (11) aufzuspannen und bei einem Aufwickeln der Leinwand (11) auf die Leinwandwelle (12) die Fixierungseinheit (20) zu dem Querträger (17) hin einzuziehen und die Leinwand (11) auf die Leinwandwelle (12) einzuholen.

8. Vorrichtung (10) nach einem der vorhergehenden Ansprüche, aufweisend:
ein oder mehrere Aufspannelemente, welche mit der Leinwand (11) gekoppelt und dazu eingerichtet sind, die Leinwand (11) bei einem Abwickeln von der Leinwandwelle (12) und bei einem Aufwickeln auf die Leinwandwelle (12) vorgegeben zu spannen.

9. Vorrichtung (10) nach einem der vorhergehenden Ansprüche, aufweisend:
ein oder mehrere Verblendungselemente (32, 33, 35), welche mit der Leinwand (11) gekoppelt und dazu eingerichtet sind, bei einem Abwickeln der Leinwand (11) von der Leinwandwelle (12) seitliche Verblendungen zwischen dem Abschirmungselement (13) und der Leinwand (11) auszubilden.

10. Vorrichtung (10) nach einem der vorhergehenden Ansprüche, aufweisend:
ein erstes Führungssystem mit Führungselementen, die mit dem Querträger (17) und/oder mit dem Fahrzeugdach (1) koppelbar sind, sodass der Querträger (17) mittels der Führungselemente des ersten Führungssystems entlang der Längsachse (L) relativ zu dem Fahrzeugdach (1) vorgegeben verfahrbar ist.

11. Vorrichtung (10) nach einem der vorhergehenden Ansprüche, aufweisend:
ein zweites Führungssystem mit Führungselementen, die mit dem Querträger (17) und mit der Leinwand (11) und/oder dem Projektor (15) gekoppelt sind, sodass die Leinwand (11) und/oder der Projektor (15) mittels der Führungselemente des zweiten Führungssystems entlang des Querträgers (17) quer zu der Längsachse (L) des Fahrzeugdachs (1) vorgegeben verfahrbar ist.

12. Vorrichtung (10) nach einem der vorhergehenden Ansprüche, bei dem der Projektor (15) um eine Achse rotierbar ist, die bezogen auf einem an dem Fahrzeugdach (1) verbauten Zustand der Vorrichtung (10) senkrecht zu einer Haupterstreckungsebene des Fahrzeugdachs (1) orientiert ist.

13. Vorrichtung (10) nach einem der vorhergehenden Ansprüche, aufweisend:
einen weiteren Projektor, der bezogen auf die Längsachse (L) zwischen der Leinwand (11) und dem Abschirmungselement (13) angeordnet ist und in einem Betrieb eine Rückseitenprojektion auf das Abschirmungselement (13) einrichtet.

14. Fahrzeugdach (1) für ein Kraftfahrzeug, aufweisend:
- ein Dachelement (3), das dazu eingerichtet ist, mit einer Dachkarosserie (2) des Kraftfahrzeugs gekoppelt zu werden, und
- eine Vorrichtung (10) nach einem der vorhergehenden Ansprüche, die auf an einer Seite mit dem Dachelement (3) gekoppelt ist, die dazu vorgesehen ist, einem Fahrzeuginnenraum des Kraftfahrzeugs zugewandt zu sein.
